**Europäisches Patentamt**

**European Patent Office**

**Office européen des brevets**

(19)

(11) Veröffentlichungsnummer : **0 381 175 B1**

(12)

# EUROPÄISCHE PATENTSCHRIFT

(45) Veröffentlichungstag der Patentschrift :
**04.03.92 Patentblatt 92/10**

(51) Int. Cl.$^5$ : **G01D 5/244**

(21) Anmeldenummer : **90101869.7**

(22) Anmeldetag : **31.01.90**

(54) **Schaltungsanordnung zur Synchronisierung von Rechtecksignalen.**

(30) Priorität : **01.02.89 DE 3902880**

(43) Veröffentlichungstag der Anmeldung :
**08.08.90 Patentblatt 90/32**

(45) Bekanntmachung des Hinweises auf die
Patenterteilung :
**04.03.92 Patentblatt 92/10**

(84) Benannte Vertragsstaaten :
**DE FR GB IT**

(56) Entgegenhaltungen :
**DE-C- 3 523 551**

(73) Patentinhaber : **Dr. Johannes Heidenhain
GmbH
Dr.-Johannes-Heidenhain-Strasse 5 Postfach
1260
W-8225 Traunreut (DE)**

(72) Erfinder : **Lengenfelder, Hans, Dipl.-Ing. (FH)
Ahamer Strasse 69
W-8260 Mühldorf (DE)**
Erfinder : **Baumgartner, Alfons
Mietenkamer Strasse 112
W-8217 Grassau (DE)**

## Beschreibung

Die Erfindung betrifft eine Schaltungsanordnung zur Synchronisierung von Rechtecksignalen gemäß dem Oberbegriff der Ansprüche 1 - 3.

Bei inkrementalen Positionsmeßeinrichtungen, beispielsweise zur Messung der Relativlage eines Werkzeugs bezüglich eines Werkstücks bei Bearbeitungsmaschinen, wird eine inkrementale Meßteilung von einer Abtasteinheit zur Erzeugung von periodischen Analogsignalen abgetastet. In bekannter Weise werden zur Diskriminierung der Meßrichtung zwei periodische Analogsignale mit einem gegenseitigen Phasenversatz von 90° und zur zusätzlichen Vermeidung von Symmetriefehlern vier periodische Analogsignale mit einem jeweiligen gegenseitigen Phasenversatz von 90° erzeugt.

Diese periodischen Analogsignale der Abtasteinheit werden in einer Auswerteeinrichtung durch Triggerstufen in periodische Rechtecksignale umgewandelt, die einem Vorwärts-/Rückwärtszähler mit einem Richtungsdiskriminator zugeführt werden; die ansteigenden und die absteigenden Flanken der periodischen Rechtecksignale werden jeweils als Zählimpulse entsprechend der Meßrichtung vorzeichenrichtig vom Vorwärts-/Rückwärtszähler gezählt.

Durch eine zu hohe Meßgeschwindigkeit, durch eine abrupte Umkehr der Meßrichtung, durch mechanische Störeinflüsse infolge von Erschütterungen beim Bearbeitungsvorgang sowie durch elektrische Störeinflüsse durch Einkoppelung von Störimpulsen insbesondere auf die Übertragungsleitungen zwischen der Abtasteinheit und der Auswerteeinrichtung oder durch eine zu geringe Bandbreite der Übertragungsleitungen kann es zu einer Verschiebung der Flanken der Rechtecksignale kommen.

Durch diese störungsbedingten Verschiebungen der Flanken der Rechtecksignale können aufeinanderfolgende Flanken insbesondere einen zu geringen Flankenabstand aufweisen; die aus diesen Flanken gewonnenen Zählimpulse können wegen ihrer zu schnellen zeitlichen Abfolge nicht mehr einwandfrei vom Vorwärts-/Rückwärtszähler verarbeitet werden, so daß es zu Fehlzählungen und damit zu Meßungenauigkeiten kommen kann, die bei den heutigen Anforderungen an die Meß- und Bearbeitungsgenauigkeit nicht mehr tragbar sind.

Aus der DE-C-35 23 551 ist ein Verfahren zur Synchronisierung von Rechtecksignalen einer Positionsmeßeinrichtung bekannt, bei dem die Rechtecksignale jeweils einer bistabilen Kippstufe zugeführt werden und die zeitliche Abfolge durch ein periodisches Taktsignal gesteuert wird; die Änderung des Signalzußtandes des Ausgangssignals einer bistabilen Kippstufe ist von den Signalzuständen der beiden Ausgangssignale der beiden unmittelbar benachbarten bistabilen Kippstufen abhängig. Dieses Synchronisierungsverfahren benötigt somit mindestens drei Rechtecksignale und ist daher nicht bei einer Positionsmeßeinrichtung einsetzbar, bei der lediglich zwei um 90° versetzte periodische Rechtecksignale zur Diskriminierung der Meßrichtung gewonnen werden.

Der Erfindung liegt die Aufgabe zugrunde, eine Schaltungsanordnung zur Synchronisierung von wenigstens zwei Rechtecksignalen anzugeben.

Diese Aufgabe Wird erfindungsgemäß durch die kennzeichnenden Merkmale der Ansprüche 1 - 3 gelöst.

Die mit der Erfindung erzielten Vorteile bestehen insbesondere darin, daß die vorgeschlagene Schaltungsanordnung bereits eine Synchronisierung von zwei Rechtecksignalen erlaubt, so daß zu geringe Flankenabstände auf ein Maß vergrößert werden, das eine einwandfreie Weiterverarbeitung ermöglicht.

Vorteilhafte Ausbildungen der Erfindung entnimmt man den abhängigen Ansprüchen.

Ausführungsbeispiele der Erfindung werden anhand der Zeichnungen naher erläutert.

Es zeigen

Figur 1 schematisch eine Positionsmeßeinrichtung;

Figur 2 eine zweistufige Synchronisierungseinheit mit Taktsteuerung;

Figur 3 ein Signaldiagramm;

Figur 4 eine dreistufige Synchronisierungseinheit mit Taktsteuerung und

Figur 5 eine zweistufige Synchronisierungseinheit ohne Taktsteuerung.

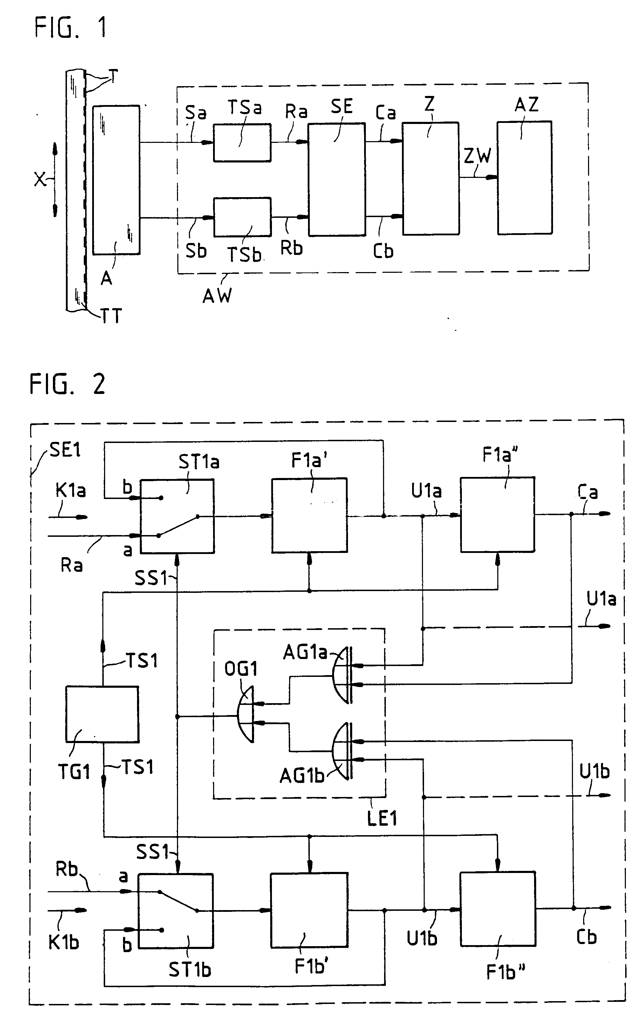

In Figur 1 ist schematisch eine Positionsmeßeinrichtung in Form einer inkrementalen Längenmeßeinrichtung zur Messung der Relativlage zweier zueinander beweglicher Objekte dargestellt. Die inkrementale Teilung T eines mit dem einen nicht gezeigten Objekt verbundenen Teilungsträgers TT wird von einer mit dem anderen nicht gezeigten Objekt verbundenen Abtasteinheit A berührungslos abgetastet. Die Abtasteinheit A erzeugt bei ihrer Meßbewegung relativ zur inkrementalen Teilung T des Teilungsträgers TT in Meßrichtung X zwei periodische Analogsignale Sa, Sb mit einem gegenseitigen Phasenversatz von 90°, der die Diskriminierung der Meßrichtung X erlaubt.

Die beiden periodischen Analogsignale Sa, Sb werden in einer Auswerteeinrichtung AW mittels zweier Triggerstufen TSa, TSb in zwei Rechtecksignale Ra, Rb umgewandelt, die über eine erfindungsgemäße Synchronisierungseinheit SE einem Vorwärts-/Rückwärtszähler Z mit einem Richtungsdiskriminator zugeführt werden, der die aus den Flanken der beiden Rechtecksignale Ca, Cb gewonnenen Zählimpulse des Richtungsdiskriminators als Zählwerte ZW für die Inkremente der inkrementalen Teilung T vorzeichenrichtig je nach der Meßrichtung +X, -X zählt; diese Zählwerte ZW des Vorwärts-/Rückwärtszählers Z für die Relativlage der beiden Objekte werden in einer nachgeschalteten Anzeigeeinheit AZ in digitaler Form anzeigt. Die beiden Objekte können durch eine Spindel und das Bett einer nicht dargestellten Bearbeitungsmaschine gebildet sein.

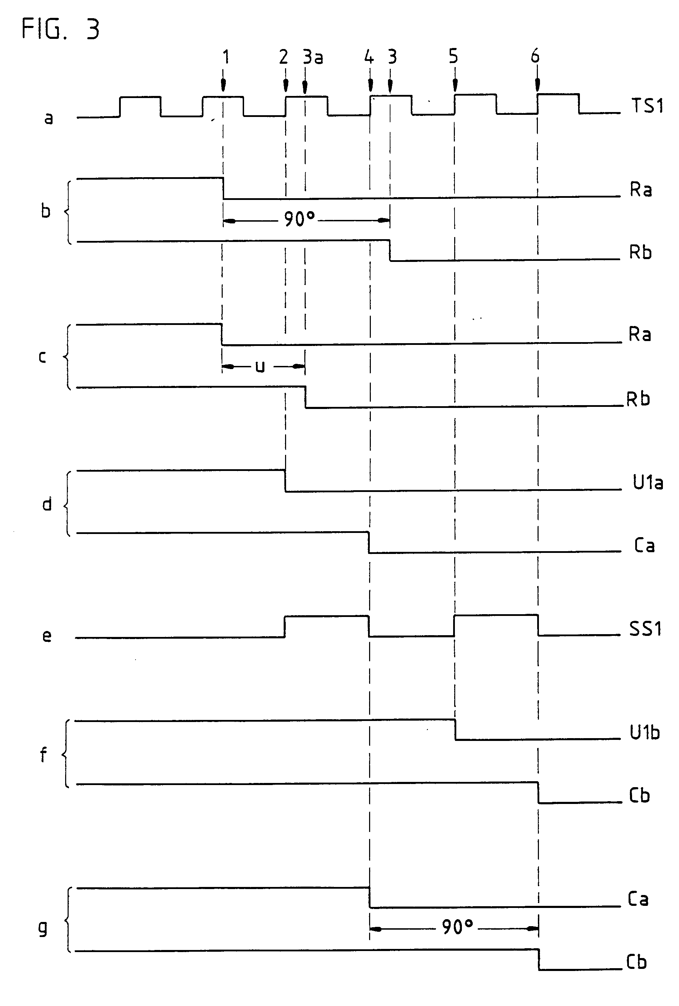

Figur 3 zeigt ein Signaldiagramm. Im ungestörten Fall nach Figur 3b weisen die beiden periodischen Rechtecksignale Ra, Rb ebenfalls den gegenseitigen Phasenversatz von 90° zur Diskriminierung der Meßrichtung +X, -X auf. In der Praxis kommt es jedoch immer wieder zu den eingangs erwähnten Störungen, so daß der reale Phasenversatz zwischen den beiden Rechtecksignalen Ra, Rb vom idealen Phasenversatz von 90° abweicht. Insbesondere kann durch störungsbedingte Verschiebungen der Flanken der Rechtecksignale Ra, Rb der Abstand zwischen aufeinanderfolgenden Flanken der beiden Rechtecksignale Ra, Rb so gering werden, daß die aus diesen Flanken durch den Richtungsdiskriminator gewonnenen Zählimpulse -besonders bei höheren Meßgeschwindigkeiten - wegen ihrer zu schnellen zeitlichen Abfolge nicht mehr einwandfrei vom Vorwärts/Rückwärtszähler Z verarbeitet werden können, so daß es zu Fehlzählungen und damit zu Meßungenauigkeiten kommen kann. In Figur 3c sind die beiden Rechtecksignale Ra, Rb mit einem zu geringen Abstand u zwischen zwei aufeinanderfolgenden Flanken dargestellt.

In Figur 2 ist eine zweistufige Synchronisierungseinheit SE1 mit Taktsteuerung zur Synchronisierung der beiden fehlerhaften Rechtecksignale Ra, Rb nach Figur 3c dargestellt. Das erste Rechtecksignal Ra wird auf einem ersten Kanal K1a über den Eingang a eines Schaltelements ST1a einer ersten bistabilen Kippstufe F1a′ und sodann einer nachgeschalteten zweiten bistabilen Kippstufe F1a″ zugeführt. Desgleichen wird das zweite Rechtecksignal Rb auf einem zweiten Kanal K1b über den Eingang a eines Schaltelements ST1b einer ersten bistabilen Kippstufe F1b′ und sodann einer nachgeschalteten zweiten bistabilen Kippstufe F1b″ zugeleitet. Die vier bistabilen Kippstufe F1a′, F1a″, F1b′, F1b″ werden gemeinsam von einem periodischen Taktsignal TS1 eines Taktgebers TG1 beaufschlagt; dieses Taktsignal TS1 ist in Figur 3a dargestellt. Die Ausgänge der beiden ersten bistabilen Kippstufen F1a′, F1b′ der beiden Kanäle K1a, K1b sind jeweils mit dem Eingang b der beiden zugehörigen Schaltelemente ST1a, ST1b verbunden. In einer Logikeinheit LE1 werden einem ersten Antivalenzgatter AG1a die beiden Rechtecksignale U1a, Ca an den beiden Ausgangen der beiden bistabilen Kippstufen F1a′, F1a″ des ersten Kanals K1a und einem zweiten Antivalenzgatter AG1b die beiden Rechtecksignale U1b, Cb an den beiden Ausgangen der beiden bistabilen Kippstufen F1b′, F1b″ des zweiten Kanals K1b zugeführt. Die beiden Antivalenzgatter AG1a, AG1b beaufschlagen ein Odergatter OG1 zur Erzeugung eines Schaltsignals SS1, das den beiden Schaltelementen ST1a, ST1b der beiden Kanäle K1a, K1b zugeleitet wird. Bei einer Ungleichheit der beiden Rechtecksignale U1a, Ca, U1b, Cb an den beiden Ausgängen der bistabilen Kippßtufen F1a′, F1a″, F1b′, F1b″ einer der beiden Kanäle K1a, K1b ändert sich der Signalzustand O des Schaltsignals SS1 auf den Signalzustand 1, so daß die beiden Schaltelemente ST1a, ST1b vom Eingang a auf den Eingang b umschalten; das Schaltsignal SS1 ist in Figur 3e dargestellt.

Das Rechtecksignal Ra nach Figur 3c, das über den Eingang a des Schaltelements ST1a am Eingang der ersten bistabilen Kippstufe F1a′ des ersten Kanals K1a anliegt, stimmt mit dem ungestörten Rechtecksignal Ra nach Figur 3b überein und ändert beim Punkt 1 seinen Signalzustand 1 auf den Signalzustand 0. Diese Änderung des Signalzustandes des Rechtecksignals Ra am Eingang der ersten bistabilen Kippstufe F1a′ des Kanals K1a wird bei der nächstfolgenden ansteigenden Flanke des Taktsignals TS1 beim Punkt 2 auf den Ausgang durchgeschaltet, so daß das Rechtecksignal U1a nach Figur 3d an diesem Ausgang seinen Signalzustand 1 auf den Signalzustand 0 beim Punkt 2 ändert. Diese Änderung des Signalzustandes des Rechtecksignals U1a am Eingang der zweiten bistabilen Kippstufe F1a″ des Kanals K1a wird bei der nächstfolgenden ansteigenden Flanke des Taktsignals TS1 beim Punkt 4 auf den Ausgang durchgeschaltet, so daß das Rechtecksignal Ca nach Figur 3d an diesem Ausgang seinen Signalzustand 1 auf den Signalzustand 0 beim Punkt 4 ändert.

Bis zum Punkt 2 besitzen die beiden am ersten Antivalenzgatter AG1a der Logikeinheit LE1 anliegenden Rechtecksignale U1a, Ca nach Figur 3d ebenso wie die am zweiten Antivalenzgatter AG1b anliegenden Rechtecksignale U1b, Cb nach Figur 3f den gleichen Signalzustand 1, so daß das Schaltsignal SS1 der Logikeinheit LE1 den Signalzustand 0 innehat, wodurch die beiden Schaltelemente ST1a, ST1b der beiden Kanäle K1a, K1b auf den Eingang a geschaltet sind. Vom Punkt 2 bis zum Punkt 4 besitzen jedoch die beiden Rechtecksignale U1a, Ca nach Figur 3d ungleiche Signalzustande, so daß das Schaltsignal SS1 der Logikeinheit LE1 seinen Signalzustand 0 auf den Signalzustand 1 ändert, wodurch die beiden Schaltelemente ST1a, ST1b auf den Eingang b umschalten.

Bis zum Punkt 2 liegt das gestörte Rechtecksignal Rb mit dem Signalzustand 1 nach Figur 3c über den Eingang a des Schaltelements ST1b an der ersten bistabilen Kippstufe F1b′ des zweiten Kanals K1b an, so daß auch das Rechtecksignal U1b am Ausgang der ersten bistabilen Kippstufe F1b′ und das Rechtecksignal Cb am Ausgang der zweiten bistabilen Kippstufe F1b″ des zweiten Kanals K1b die Signalzustände 1 nach Figur 3f besitzen. Vom Punkt 2 bis zum Punkt 4 weist das Schaltsignal SS1 nach Figur 3e den Signalzustand 1 auf, so daß die beiden Schaltelemente ST1a, ST1b der beiden Kanäle K1a, K1b auf den Eingang b geschaltet sind. Die Änderung des Signalzustandes 1 auf den Signalzustand 0 beim gestörten Rechtecksignal Rb nach Figur 3c im Punkt 3a wird daher erst bei der auf den Punkt 4 nächstfolgenden ansteigenden Flanke des Taktsignals TS1 beim Punkt 5 auf den Ausgang der ersten bistabilen Kippstufe F1b' des zweiten Kanals K1b durchgeschaltet, so daß das Rechtecksignal U1b nach Figur 3f an diesem Ausgang seinen Signalzustand 1 auf den Signalzustand 0 beim Punkt 5 ändert. Diese Änderung des Signalzustandes des Rechtecksignals U1b am Eingang der zweiten bistabilen Kippstufe F1b'' des zweiten Kanals K1b wird bei der nächstfolgenden ansteigenden Flanke des Taktsignals TS1 beim Punkt 6 auf den Ausgang durchgeschaltet, so daß das Rechtecksignal Cb nach Figur 3f an diesem Ausgang seinen Signalzustand 1 auf den Signalzustand 0 beim Punkt 6 ändert. In Figur 3g sind das Rechtecksignal Ca nach Figur 3d und das Rechtecksignal Cb nach Figur 3f einander gegenübergestellt; man erkennt, daß die beiden Rechtecksignale Ca, Cb wieder den geforderten Phasenversatz von 90° aufweisen, so daß Meßungenauigkeiten durch Fehlzählungen ausgeschlossen sind.

Anstelle der beiden Rechtecksignale Ca, Cb mit dem korrekten Phasenversatz von 90° nach Figur 3 können auch das Rechtecksignal U1a nach Figur 3d und das Rechtecksignal U1b nach Figur 3f dem Zähler Z zugeführt werden (in der Figur 2 gestrichelt dargestellt, da auch diese beiden Rechtecksignale U1a, U1b den geforderten Phasenversatz von 90° aufweisen.

Diese zweistufige Synchronisierungseinheit SE1 vermag den zu geringen Abstand u zwischen zwei aufeinanderfolgenden Flanken der beiden Rechtecksinale Ra, Rb auf den geforderten Abstand bei den beiden Rechtecksignalen Ca, Cb zu vergrößern.

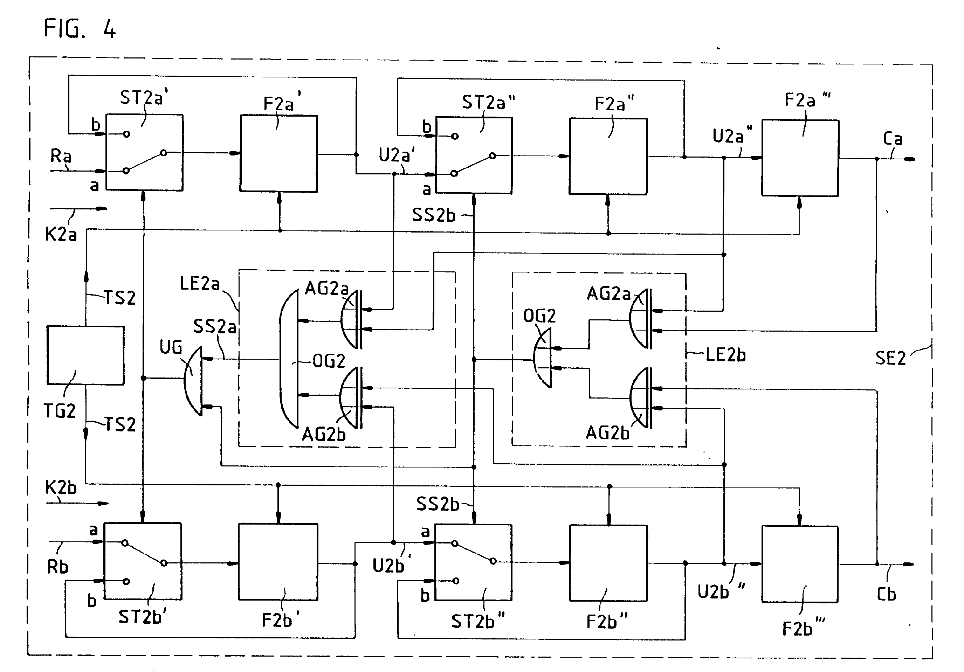

In Figur 4 ist eine dreistufige Synchronisierungseinheit SE2 mit Taktsteuerung dargestellt, die analog zur Synchronisierungseinheit SE1 nach Figur 2 aufgebaut ist und dementsprechend auch die gleichen Bezugszeichen aufweist, bei denen jedoch die Ziffer 1 durch die Ziffer 2 ersetzt ist. In den beiden Kanälen K2a, K2b sind jeweils zwei Schaltelemente ST2a', ST2a'', ST2b', ST2b'' sowie jeweils drei bistabile Kippstufen F2a', F2a'', F2a''', F2b', F2b'', F2b''' seriell angeordnet. Desweiteren sind zwei Logikeinheiten LE2a, LE2b sowie ein zusätzliches Undgatter UG vorgesehen, dessen beide Eingänge von den beiden Schaltsignalen SS2a, SS2b der beiden Logikeinheiten LE2a, LE2b beaufschlagt sind; der Ausgang des Undgatters UG ist mit den beiden ersten Schaltelementen ST2a', ST2b' der beiden Kanäle K2a, K2b verbunden, an deren Eingängen a die beiden Rechtecksignale Ra, Rb nach Figur 3c anliegen. An den Ausgängen der beiden dritten bistabilen Kippstufen F2a''', F2b''' stehen die Rechtecksignale Ca, Cb nach Figur 3g an. Das Schaltsignal SS2b der zweiten Logikeinheit LE2b beaufschlagt die beiden Schaltelemente ST2a'', St2b''. Das Taktsignal TS2 eines Taktgebers TG2 steuert sämtliche bistabilen Kippstufen F2a', F2a'', F2a''', F2b', F2b'', F2b''' an. Die beiden ersten bistabilen Kippstufen F2a', F2a'', F2b', F2b'' jedes Kanals K2a, K2b sind mit den Eingängen b ihrer zugehörigen Schaltelemente ST2a', ST2a'', ST2b', ST2b'' verbunden. Diese dreistufige Synchronisierungseinheit SE2 hat die gleiche Wirkungsweise wie die zweistufige Synchronisierungseinheit SE1 nach Figur 2 und vermag die zu geringen Abstände zwischen drei aufeinanderfolgenden Flanken der beiden Rechtecksignale Ra, Rb auf die geforderten Abstände bei den beiden Rechtecksignalen Ca, Cb zu vergrössern.

In nicht dargestellter Weise kann die Synchronisierungseinheit SE auf n Stufen erweitert werden (n = 1, 2, 3, ...) .

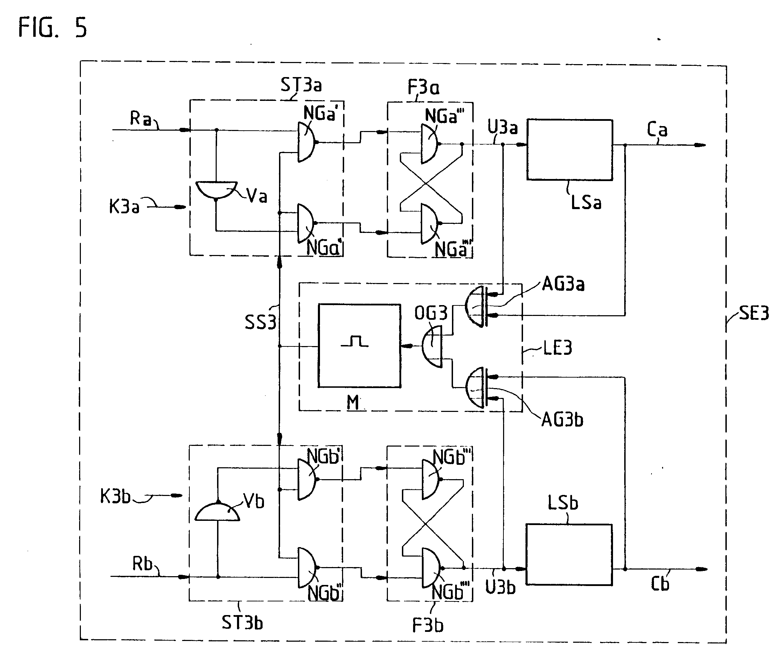

In Figur 5 ist eine zweistufige Synchronisierungseinheit SE3 ohne Taktsteuerung zur Synchronisierung der beiden fehlerhaften Rechtecksignale Ra, Rb nach Figur 3c dargestellt. Das erste Rechtecksignal Ra Wird auf einem ersten Kanal K3a über ein Schaltelement ST3a einer bistabilen Kippstufe F3a und sodann einer nachgeschalteten Laufzeitstufe LSa zugeführt. Desgleichen wird das zweite Rechtecksignal Rb auf einem zweiten Kanal K3b einer bistabilen Kippstufe F3b und sodann einer nachgeschalteten Laufzeitstufe LSb zugeleitet. In einer Logikeinheit LE3 werden einem ersten Antivalenzgatter AG3a die beiden Rechtecksignale U3a, Ca an den Ausgängen der bistabilen Kippstufe F3a und der Laufzeitstufe LSa des ersten Kanals K3a und einem zweiten Antivalenzgatter AG3b die beiden Rechtecksignale U3b, Cb an den Ausgängen der bistabilen Kippstufe F3b und der Laufzeitstufe LSb des zweiten Kanals K3b zugeführt. Die beiden Antivalenzgatter AG3a, AG3b beaufschlagen über ein Odergatter OG3 eine monostabile Kippstufe M zur Erzeugung eines Schaltsignals SS3, das den beiden Schaltelementen ST3a, ST3b der beiden Kanäle K3a, K3b zugeleitet wird.

Im Schaltelement ST3a des ersten Kanals K3a wird das erste Rechtecksignal Ra dem ersten Eingang eines ersten Nandgatters NGa' und über einen Inverter Va in invertierter Form dem zweiten Eingang eines zweiten Nandgatters NGa'' zugeführt; das Schaltsignal SS3 der Logikeinheit LE3 beaufschlagt den zweiten Eingang des ersten Nandgatters NGa' und den ersten Eingang des zweiten Nandgatters NGa''. Der Ausgang des ersten Nandgatters NGa' des Schaltelements ST3a sind in der bistabilen Kippstufe F3a mit dem ersten Eingang eines ersten Nandgatter NGa''' und der Ausgang des zweiten Nandgatters NGa'' des Schaltelements ST3a in der bistabilen Kippstufe F3a mit dem zweiten Eingang eines zweiten Nandgatters NGa'''' verbunden. Dabei sind in der bistabilen Kippstufe F3a der zweite Eingang des ersten Nandgatters NGa''' an dem Ausgang des zweiten

4

Nandgatters NGa″″ und der erste Eingang des zweiten Nandgatters NGa″″ an den Ausgang des ersten Nandgatters NGa‴ angeschlossen; der Ausgang des ersten Nandgatters NGa‴, auf dem das Rechtecksignal U3a ansteht, ist mit dem Eingang der Laufzeitstufe LSa verbunden. In gleichartiger Weise sind im zweiten Kanal K3b das Schaltelement ST3b und die bistabile Kippstufe F3b mit den entsprechenden Bezugzeichen aufge-baut.

Beispielsweise bei einer Änderung des Signalzustandes des ersten Rechtecksignals Ra auf dem ersten Kanal K3a am Eingang des Schaltelements ST3a ändert auch das Rechtecksignal U3a am Ausgang der bistabilen Kippstufe F3a seinen Signalzustand, während das Rechtecksignal Ca am Ausgang der Laufzeitstufe LSa aufgrund ihrer Zeitkonstante vorerst keine Änderung seines Signalzustandes erfährt. Wegen der unterschiedlichen Signalzustände der beiden Rechtecksignale U3a, Ca ändert das Schaltsignal SS3 der monostabilen Kippstufe M der Logikeinheit LE3 seinen Signalzustand 1 auf den Signalzustand 0 und sperrt damit die beiden Schaltelemente ST3a, ST3b der beiden Kanäle K3a, K3b, so daß die beiden bi stabilen Kippstufen F3a, F3b ihren Zustand nicht andern können. Dieser Sperrzustand bleibt bis zum Ablauf der Zeitkonstante der monostabilen Kippstufe M erhalten, da die Laufzeiten der beiden Laufzeitstufen LSa, LSb gleich sind; diese einstellbare Zeitkonstante bestimmt somit den minimalen zeitlichen Flankenabstand zwischen den beiden Rechtecksignalen Ca, Cb am Ausgang der Synchronisierungseinheit SE3. Die Zeitspanne zwischen der Änderung eines der beiden Rechtecksignale Ra, Rb und der Sperrung der beiden Schaltelemente ST3a, ST3b der beiden Kanale K3a, K3b bestimmt den minimalen zeitlichen Flankenabstand zwischen den beiden Rechtecksignalen Ra, Rb am Eingang der Synchronisierungseinheit SE3, der noch einwandfrei vom Vorwärts-/Rückwärtszähler Z Verarbeitet werden kann.

Anstelle der beschriebenen zwei Kanale Ka, Kb können auch n Kanäle K vorgesehen sein, denen jeweils ein Rechtecksignal R zugeführt wird (n = 1, 2, 3, ...), wobei zwischen jeweils zwei benachbarten Kanälen K eine Logikeinheit LE vorgesehen ist.

Die Erfindung ermöglicht es somit generell, bei wenigstens zwei Rechtecksignalen R zu geringe zeitliche Abstände zwischen wenigstens zwei aufeinanderfolgenden Flanken auf einen mindest zulässigen Flankenabstand zu vergrößern, der einwandfrei verarbeitet werden kann.

**Patentansprüche**

1. Schaltungsanordnung zur Synchronisierung von Rechtecksignalen (Ra, Rb) mittels einer Synchronisierungseinheit (SE1), die bistabile Kippstufen (F1a′, F1b′, F1a″, F1b″) und wenigstens eine Logikeinheit (LE1) aufweist, bei der eine Änderung des Signalzustandes eines Rechtecksignals (Ra, Rb) am Eingang der Synchronisierungseinheit (SE1) Änderungen der Signalzustände der Rechtecksignale (U1a, U1b, Ca, Cb) am Ausgang der Synchronisierungseinheit für eine vorgebbare Zeitdauer unterbindet und damit die geforderten zeitlichen Flankenabstande zwischen diesen Rechtecksignalen (U1a, U1b, Ca, Cb) erzeugt, dadurch gekennzeichnet, daß bei einer zweistufigen Synchronisierungseinheit (SE1) auf jedem Kanal (K1a, K1b) ein Schaltelement (ST1a, ST1b), eine erste bistabile Kippstufe (F1a′, F1b′) sowie eine zweite bistabile Kippstufe (F1a″, F1b″) seriell angeordnet sind, daß sämtliche bistabilen Kippstufen (F1a′, F1b′, F1a″, F1b″) vom Taktsignal (TS1) eines Taktgebers (TG1 beaufschlagt sind, daß die Rechtecksignale (Ra, Rb) am Eingang der Synchronisierungseinheit (SE1) jeweils an einem Eingang (a) der Schaltelemente (ST1a, ST1b) anliegen, daß die Rechtecksignale (U1a, U1b) am Ausgang der ersten bistabilen Kippstufen (F1a′, F1b′) jeweils einen Eingang (b) der Schaltelemente (ST1a, ST1b) beaufschlagen und zusammen mit den Rechtecksignalen (Ca, Cb) am Ausgang der zweiten bistabilen Kippstufen (F1a″, F1b″) an einer Logikeinheit (LE1) anliegen und daß ein Schaltsignal (SS1) der Logikeinheit (LE1) die Schaltelemente (ST1a, ST1b) vom Eingang (a) auf den Eingan (b) bei einer Un leichheit der Signalzustande der Rechtecksignale (U1a, Ca, U1b, Cb) eines Kanals (K1a, K1b) für die vorgebbare Zeitdauer umschaltet.

2. Schaltungsanordnung zur Synchronisierung von Rechtecksignalen mittels einer Synchronisierungseinheit (SE2), die bistabile Kippstufen (F2a′, F2b′, F2a″, F2b″, F2a‴, F2b‴) und wenigstens eine Logikeinheit (LE2a, LE2b) aufweist, bei der eine Änderung des Signalzustandes eines Rechtecksignals (Ra, Rb) am Eingang der Synchronisierungseinheit (SE2) Änderungen der Signalzustände der Rechtecksignale (Ca, Cb) am Ausgang der Synchronisierungseinheit für eine vorgebbare Zeitdauer unterbindet und damit die geforderten zeitlichen Flankenabstände zwischen diesen Rechtecksignalen (Ca, Cb) erzeugt, dadurch gekennzeichnet, daß bei einer dreistufigen Synchronisierungseinheit (SE2) auf jedem Kanal (K2a, K2b) ein erstes Schaltelement (ST2a′, ST2b′), eine erste bistabile Kippstufe (F2a′, F2b′), ein zweites Schaltelement (ST2a″, ST2b″), eine zweite bistabile Kippstufe (F2a″, F2b″) sowie eine dritte bistabile Kippstufe (F2a‴, F2b‴) seriell angeordnet sind, daß sämtliche bistabilen Kippstufen (F2a′, F2b′, F2a″, F2b″, F2a‴, F2b‴) vom Taktsignal (TS2) eines Taktgebers (TG2) beaufschlagt sind, daß die Rechtecksignale (Ra, Rb) am Eingang der Synchronisierungseinheit (SE2) jeweils an einem Eingang (a) der ersten Schaltelemente (ST2a′, ST2b′) anliegen, daß die Rechtecksignale (U2a′, U2b′) am Ausgang der ersten bistabilen Kippstufen (F2a′, F2b′) jeweils einen Eingang (b) der esten Schaltelemente (ST2a′, ST2b′) sowie jeweils einen Eingang (a) der zweiten Schaltelemente (ST2a″, ST2b″) beaufschlagen, daß die Rechtecksignale (U2a″, U2b″) am Ausgang der zweiten bistabilen Kippstufen (F2a″, F2b″) jeweils einen Eingang (b) der zweiten Schaltelemente (ST2a″, ST2b″) beaufschlagen, daß die Rechtecksignale (U2a′, U2b′) am Ausgang der ersten bistabilen Kippstufen (F2a′, F2b′) zusammen mit den Rechtecksignalen (U2a″, U2b″) am Ausgang der zweiten bistabilen Kippstufen (F2a″, F2b″) an einer ersten Logikeinheit (LE2a) und die Rechtecksignale (U2a″, U2b″) am Ausgang der zweiten bistabilen Kippstufen (F2a″, F2b″) zusammen mit den Rechtecksignalen (Ca, Cb) am Ausgang der dritten bistabilen Kippstufen (F2a‴, F2b‴) an einer zweiten Logikeinheit (LE2b) anliegen und daß ein zweites Schaltsignal (SS2b) der zweiten Logikeinheit (LE2b) die zweiten Schaltelemente (ST2a″, ST2b″) vom Eingang (a) auf den Eingang (b) bei einer Ungleichheit der Signalzustande der Rechtecksignale (U2a″, Ca, U2b″, Cb) eines Kanals (K2a, K2b) und daß ein erstes Schaltsignal (SS2a) der ersten Logikeinheit (LE2a) und das zweite Schaltsignal (SS2b) der zweiten Logikeinheit (LE2b) über ein Undgatter (UG) die ersten Schaltelemente (ST2a′, ST2b′) vom Eingang (a) auf den Eingang (b) bei einer Ungleichheit der Signalzustände der Rechtecksignale (U2a′, U2a″, U2b′, U2b″; U2a″, Ca, U2b″, Cb) für die vorgebbare Zeitdauer umschalten.

3. Schaltungsanordnung zur Synchronisierung von Rechtecksignalen mittels einer Synchronisierungseinheit (SE3), die bistabile Kippstufen (F3a, F3b) und wenigstens eine Logikeinheit (LE3) aufweist, bei der eine Änderung des Signalzustandes eines Rechtecksignals (Ra, Rb) am Eingang der Synchronisierungseinheit (SE3) Änderungen der Signalzustände der Rechtecksignale (Ca, Cb) am Ausgang der Synchronisierungseinheit für eine vorgebbare Zeitdauer unterbindet und damit die geforderten zeitlichen Flankenabstände zwischen diesen Rechtecksignalen (Ca, Cb) erzeugt, dadurch gekennzeichnet, daß bei einer zweistufigen Synchronisierungseinheit (SE3) auf Jedem Kanal (K3a, K3b) ein Schaltelement (ST3a, ST3b), eine bistabile Kippstufe (F3a, F3b) sowie eine Laufzeitstufe (Lsa, LSb) seriell angeordnet sind, daß die Rechtecksignale (Ra, Rb) am Eingang der Synchronisierungseinheit (SE3) am Eingang der Schaltelemente (ST3a, ST3b) anliegen, daß die Rechtecksignale (U3a, U3b) am Ausgang der bistabilen Kippstufen (F3a, F3b) zusammen mit den Rechtecksignalen (Ca, Cb) am Ausgang der Laufzeitstufen (LSa, LSb) an einer Logikeinheit (LE3) anliegen und daß ein Schaltsignal (SS3) der Logikeinheit (LE3) die Schaltelemente (ST3a, ST3b) bei einer Ungleichheit der Signalzustände der Rechtecksignale (U3a, Ca, U3b, Cb) eines Kanals (K3a, K3b) für die vorgebbare Zeitdauer sperrt.

4. Schaltungsanordnung nach den Ansprüchen 1 und 2, dadurch gekennzeichnet, daß die Logikeinheit (LE1, LE2a, LE2b) für jeden benachbarten Kanal (K1a, K1b, K2a, K2b) ein Antivalenzgatter (AG1a, AG1b, AG2a, AG2b) sowie ein diesen Antivalenzgattern (AG1a, AG1b, AG2a, AG2b) nachgeschaltetes Odergatter (OG1, OG2) aufweist.

5. Schaltungsanordnung nach Anspruch 3, dadurch gekennzeichnet, daß die Logikeinheit (LE3) für jeden benachbarten Kanal (K3a, K3b) ein Antivalenzgatter (AG3a, AG3b) sowie ein diesen Antivalenzgattern (AG3a, AG3b) nachgeschaltetes Odergatter (OG3) aufweist, das eine monostabile Kippstufe (M) beaufschlagt.


**Revendications**

1. Circuit pour la synchronisation de signaux carrés (Ra, Rb) au moyen d'une unité de synchronisation (SE1), qui comporte des bascules bistables (F1a′, F1b′, F1a″, F1b″) et au moins une unité logique (LE1), dans lequel un changement d'état d'un signal carré (Ra, Rb) à l'entrée de l'unité de synchronisation (SE1) inhibe, pour une durée que l'on peut prédéterminer, des changements d'état des signaux carrés (U1a, U1b, Ca, Cb) à la sortie de l'unité de synchronisation et produit ainsi les écarts dans le temps entre flancs nécessaires entre lesdits signaux carrés (U1a, U1b, Ca, Cb), caractérisé en ce que, dans une unité de synchronisation à deux étages (SE1), un élément logique (ST1a, ST1b), une première bascule bistable (F1A′, F1b′) ainsi qu'une deuxième bascule bistable (F1a″, F1b″) sont disposés en série sur chaque canal (K1a, K1b), en ce que toutes les bascules bistables (F1a′, F1b′, F1a″, F1b″) reçoivent le signal d'horloge (TS1) d'une horloge (TG1), en ce que les signaux carrés (Ra, Rb) disponibles à l'entrée de l'unité de synchronisation (SE1) sont appliqués chacun à une entrée (a) des éléments logiques (ST1a, ST1b), en ce que les signaux carrés (U1a, U1b) disponibles à la sortie de la première bascule bistable (F1a′, F1b′) sont appliqués chacun à une entrée (b) des éléments logiques (ST1a, ST1b) et sont appliqués, avec les signaux carrés (Ca, Cb) disponibles à la sortie des deuxièmes bascules bistables (F1a″, F1b″) à une unité logique (LE1) et en ce qu'un signal de commutation (SS1) de l'unité logique (LE1) commute les éléments logiques (ST1a, ST1b) de l'entrée (a) vers l'entrée (b) pour une durée que l'on peut prédéterminer, lorsque les états des signaux carrés (U1a, Ca, U1b, Cb) d'un canal (K1a, K1b) sont différents.

2. Circuit pour la synchronisation de signaux carrés au moyen d'une unité de synchronisation (SE2), qui comporte des bascules bistables (F2a′, F2b′, F2a″, F2b″, F2a‴, F2b‴) et au moins une unité logique (LE2a, LE2b), dans lequel un changement d'état d'un signal carré (Ra, Rb) à l'entrée de l'unité de synchronisation (SE2) inhibe, pour une durée que l'on peut prédéterminer, des changements d'état des signaux carrés (La, Lb) à la sortie de l'unité de synchronisation et produit ainsi les écarts dans le temps entre flancs nécessaires entre lesdits signaux carrés (La, Lb), caractérisé en ce, que dans une unité de synchronisation à trois étages (SE2), un premier élément logique (ST2a′, ST2b′), une première bascule bistable (F2a′, F2b′), un deuxième élément logique (ST2a″, ST2b″), une deuxième bascule bistable (F2a″, F2b″) ainsi qu'une troisième bascule bistable (F2a‴, F2b‴) sont disposés en série sur chaque canal (K2a, K2b), en ce que toutes les bascules bistables (F2a′, F2b′, F2a″, F2b″, F2a‴, F2b‴) reçoivent le signal d'horloge (TS2) d'une horloge (TG2), en ce que les signaux carrés (Ra, Rb) disponibles à l'entrée de l'unité de synchronisation (SE2) sont appliqués chacun à une entrée (a) des premiers, éléments logiques (ST2a′, ST2b′), en ce que les signaux carrés (U2a′, U2b′) disponibles à la sortie de la première bascule bistable (F2a′, F2b′) sont appliqués chacun à une entrée (b) des premiers éléments logiques (ST2a′, ST2b′) ainsi qu'à une entrée (a) des deuxièmes éléments logiques (ST2a″, ST2b″), en ce que les signaux carrés (U2a″, U2b″) disponibles à la sortie des deuxièmes bascules bistables (F2a″, F2b″) sont appliqués chacun à une entrée (b) des deuxièmes éléments logiques (ST2a″, ST2b″), en ce que les signaux carrés (U2a′, U2b′) disponibles à la sortie des premières bascules bistables (F2a′, F2b′) sont appliqués avec les signaux carrés (U2a″, U2b″) disponibles à la sortie des deuxièmes bascules bistables (F2a″, F2b″) à une unité logique (LE2a) et les signaux carrés (U2a″, U2b″) disponibles à la sortie des deuxièmes bascules bistables (F2a″, F2b″) sont appliqués avec les signaux carrés (Ca, Cb) disponibles à la sortie des troisièmes bascules bistables (F2a‴, F2b‴) à une deuxième unité logique (LE2b) et en ce qu'un deuxième signal de commutation (SS2b) de la deuxième unité logique (LE2b) commute les deuxièmes éléments logiques (ST2a″, ST2b″) de l'entrée (a) vers l'entrée (b) lorsque les états des signaux carrés (U2a″, Ca, U2b″, Cb) d'un canal (K2a, K2b) sont différents et en ce qu'un premier signal de commutation (SS2a) de la première unité logique (LE2a) et le deuxième signal de commutation (SS2b) de la deuxième unité logique (LE2b) commute par l'intermédiaire d'une porte-ET (UG) les premiers éléments logiques (ST2a′, ST2b′) de l'entrée (a) vers l'entrée (b) pour une durée que l'on peut prédéterminer, lorsque les états des signaux carrés (U2a′, U2a″, U2b′, U2b″; U2a″, Ca, U2b″, Cb) sont différents.

3. Circuit pour la synchronisation de signaux carrés (Ra, Rb) au moyen d'une unité de synchronisation (SE3), qui comporte des bascules bistables (F3a, F3b) et au moins une unité logique (LE3), dans lequel un changement d'état d'un signal carré (Ra, Rb) à l'entrée de l'unité de synchronisation (SE3) inhibe, pour une durée que l'on peut prédéterminer, des changements d'état des signaux carrés (La, Lb) à la sortie de l'unité de synchronisation et produit ainsi les écarts dans le temps entre flancs nécessaires entre lesdits signaux carrés (La, Lb) caractérisé en ce que dans une unité de synchronisation à deux étages (SE3), un élément logique (ST3a, ST3b), une première bascule bistable (F3a, F3b) ainsi qu'un étage de temps (Lsa, Lsb) sont disposés en série sur chaque canal (K3a, K3b), en ce que les signaux carrés (Ra, Rb) disponibles à l'entrée de l'unité de synchronisation (SE3) sont appliqués à l'entrée des éléments logiques (ST3a, ST3b), en ce que les signaux carrés (U3a, U3b) disponibles à la sortie des bascules bistables (F3a, F3b) sont appliqués, avec les signaux carrés (Ca, Cb) disponibles à la sortie de l'étage de temps (Lsa, Lsb) à une unité logique (LE3) et en ce qu'un signal de commutation (SS3) de l'unité logique (LE3) bloque les éléments logiques (ST3a, ST3b) pour une durée que l'on peut prédéterminer, lorsque les états des signaux carrés (U3a, Ca, U3b, Cb) d'un canal (K3a, K3b) sont différents.

4. Circuit selon les revendications 1 et 2 caractérisé en ce que l'unité logique (LE1, LE2a, LE2b) comporte pour chaque canal voisin (K1a, K1b, K2a, K2b) une porte OU-exclusif (AG1a, AG1b, AG2a, AG2b) ainsi qu'une porte-OU (OG1, OG2) placée derrière lesdites portes OU-exclusif (AG1a, AG1b, AG2a, AG2b).

5. Circuit selon la revendication 3 caractérisé en ce que l'unité logique (LE3) comporte pour chaque canal voisin (K3a, K3b) une porte OU-exclusif (AG3a, AG3b) ainsi qu'une porte-OU (OG3) placée derrière lesdites portes OU-exclusif (AG3a, AG3b), qui commande une bascule monostable (M).

## Claims

1. Circuit arrangement for synchronising squarewaves (Ra, Rb) by means of a synchronising unit (SE1), which comprises bistable flip-flop stages (F1a′, F1b′, F1a″, F1b″) and at least one logic unit (LE1), in which a change of the signal state of a squarewave (Ra, Rb) at the input of the synchronising unit (SE1) prevents changes in the signal states of the squarewaves (U1a, U1b, Ca, Cb) at the output of the synchronising unit for a predetermined interval of time and thus establishes the required timewise spacing of flanks between these squarewaves (U1a, U1b, Ca, Cb), characterized in that, with a two-stage synchronising unit (SE1) there are serially arranged in each channel (K1a, K1b) a switching element (ST1a, ST1b), a first bistable flip-flop stage

7

(F1a′, F1b′) as well as a second bistable flip-flop stage (F1a″, F1b″), in that all bistable flip-flop stages (F1a′, F1b′, F1a″, F1b″) are responsive to a clock signal (TS1) of a clock generator (TG1), in that the squarewaves (Ra, Rb) at the inputs of the synchronising unit (SE1) are each applied to one input (a) of the switching elements (ST1a, ST1b), in that the squarewaves (U1a, U1b) at the outputs of the first bistable flip-flop stages (F1a′, F1b′) each act on an input (b) of the switching elements (ST1a, ST1b) and are applied together with the squarewaves (Ca, Cb) at the outputs of the second bistable flip-flop stages (F1a″, F1b″) to a logic unit (LE1), and in that a switching signal (SS1) of the logic unit (LE1) switches over the switching elements (ST1a, ST1b) from the input (a) to the input (b) for the predetermined interval of time when there is lack of equality of the signal states of the squarewaves (U1a, Ca, U1b, Cb) of a channel (K1a, K1b).

2. Circuit arrangement for synchronising squarewaves by means of a synchronising unit (SE2), which comprises bistable flip-flop stages (F2a′, F2b′, F2a″, F2b″, F2a‴, F2b‴) and at least one logic unit (LE2a, LE2b), in which a change of the signal states of a squarewave (Ra, Rb) at the input of the synchronising unit (SE2) prevents changes in the signal state of the squarewaves (Ca, Cb) at the output of the synchronising unit for a predetermined interval of time and thus establishes the required timewise spacing of flanks between these squarewaves (Ca, Cb), characterized in that, with a three-stage synchronising unit (SE2) there are serially arranged in each channel (K2a, K2b) a first switching element (ST2a′, ST2b′), a first bistable flip-flop stage (F2a′, F2b′), a second switching element (ST2a″, ST2b″), a second bistable flip-flop stage (F2a″, F2b″), as well as a third bistable flip-flop stage (F2a‴, F2b‴), in that all bistable flip-flop stages (F2a′, F2b′, F2a″, F2b″, F2a‴, F2b‴) are responsive to a clock signal (TS2) of a clock generator (TG2), in that the squarewaves (Ra, Rb) at the inputs of the synchronising unit (SE2) are each applied to one input (a) of the first switching elements (ST2a′, ST2b′), in that the squarewaves (U2a′, U2b′) at the outputs of the first bistable flip-flop stages (F2a′, F2b′) each act on an input (b) of the first switching elements (ST2a′, SE2b′) as well as an input (a) of the second switching elements (ST2a″, ST2b″), in that the squarewaves (U2a″, U2b″) at the outputs of the second bistable flip-flop stages (F2a″, F2b″) each act on an input (b) of the second switching elements (ST2a″, ST2b″), in that the squarewaves (U2a′, U2b′) at the outputs of the first bistable flip-flop stages (F2a′, F2b′) together with the squarewaves (U2a″, U2b″) at the outputs of the second bistable flip-flop stages (F2a″, F2b″) are applied to a first logic unit (LE2a) and the squarewaves (U2a″, U2b″) at the outputs of the second bistable flip-flop stages (F2a″, F2b″) are applied together with the squarewaves (Ca, Cb) at the outputs of the third bistable flip-flop stages (F2a‴, F2b‴) to a second logic unit (LE2b), and in that a second switching signal (SS2b) of the second logic unit (LE2b) switches the second switching elements (ST2a″, ST2b″) from the input (a) to the input (b) when there is lack of equality of the signal states of the squarewaves (U2a″, Ca, U2b″, Cb) of a channel (K2a, K2b) and in that a first switching signal (SS2a) of the first logic unit (LE2a) and the second switching signal (SS2b) of the second logic unit (LE2b) switch over the first switching elements (ST2a′, ST2b′), via an AND gate (UG), from the input (a) to the input (b) for the predetermined interval of time, when there is lack of equality of the signal states of the squarewaves (U2a′, U2a″, U2b′, U2b″; U2a″, Ca, U2b″, Cb).

3. Circuit arrangement for synchronising squarewaves by means of a synchronising unit (SE3), which comprises bistable flip-flop stages (F3a, F3b) and at least one logic unit (LE3), in which a change of the signal state of a squarewave (Ra, Rb) at the input of the synchronising unit (SE3) presents changes in the signal state of the squarewaves (Ca, Cb) at the output of the synchronising unit for a predetermined interval of time and thus establishes the required timewise spacing of flanks between these squarewaves (Ca, Cb), characterized in that, with a two-stabe synchronising unit (SE3) there are serially arranged in each channel (K3a, K3b) a switching element (ST3a, ST3b), a bistable flip-flop stage (F3a, F3b) as well as a delay stage (LSa, LSb), in that the squarewaves (Ra, Rb) at the inputs of the synchronising unit (SE3) are applied to the inputs of the switching elements (ST3a, ST3b), in that the squarewaves (U3a, U3b) at the outputs of the bistable flip-flop stages (F3a, F3b) are applied together with the squarewaves (Ca, Cb) at the outputs of the delay stages (LSa, LSb) to a logic unit (LE3), and in that a switching signal (SS3) of the logic unit (LE3) blocks the switching elements (ST3a, ST3b) for the predetermined interval of time when there is lack of equality of the signal states of the squarewaves (U3a, Ca, U3b, Cb) of a channel (K3a, K3b).

4. Circuit arrangement according to claims 1 and 2, characterized in that the logic unit (LE1, LE2a, LE2b) has an exclusive OR gate (AG1a, AG1b, AG2a, AG2b) for each related channel (K1a, K1b, K2a, K2b) as well as a following OR gate (OG1, OG2) connected to these exclusive OR gates (AG1a, AG1b, AG2a, AG2b).

5. Circuit arrangement according to claim 3, characterized in that the logic unit (LE3) has an exclusive OR gate (AG3a, AG3b) for each related channel (K3a, K3b) as well as a following OR gate (OG3) connected to these exclusive OR gates (AG3a, AG3b) and acting on a monostable stage (M).

# FIG. 1

# FIG. 2

# FIG. 3

FIG. 4

EP 0 381 175 B1

FIG. 5